# EUROPÄISCHE PATENTSCHRIFT

(11) **EP 4 074 157 B1**
(45) Veröffentlichungstag und Bekanntmachung des Hinweises auf die Patenterteilung: **18.02.2026**
(21) Anmeldenummer: 22401008.2
(22) Anmeldetag: 25.03.2022
(51) Int. Cl.: A01B 73/04, A01C 7/20

(54) **LANDWIRTSCHAFTLICHE MASCHINE MIT ZUMINDEST EINEM AUSLEGER**
AGRICULTURAL MACHINE WITH AT LEAST ONE BOOM
MACHINE AGRICOLE POURVUE D'AU MOINS UN BRAS

(30) Priorität: 12.04.2021 DE 102021109084
(43) Veröffentlichungstag der Anmeldung: 19.10.2022
(73) Patentinhaber: Amazonen-Werke H. Dreyer SE & Co. KG, 49205 Hasbergen (DE)
(72) Erfinder: Kruse, Christian, 26349 Jade (DE); Mertens, Daniel, 26121 Oldenburg (DE); Borovac, Danijel, 26127 Oldenburg (DE)

(56) Entgegenhaltungen:
- DE-U1- 202014 006 873
- US-A- 4 535 848
- US-A- 4 570 722
- US-B1- 7 073 604

## Beschreibung

Die Erfindung betrifft eine landwirtschaftliche Maschine mit zumindest einem Ausleger gemäß dem Oberbegriff des Patentanspruches 1.

Derartige landwirtschaftliche Maschinen sind in US 4 535 848 A, wobei eine Schwenkbegrenzungseinrichtung als Einstellgewinde zwischen dem Aktor und einem Block am Ausleger ausgeführt ist, und US 4 570 722 A, wobei eine nicht einstellbare Schwenkbegrenzungseinrichtung als Verbindungsglied mit Anschlag ausgeführt ist, offenbart.

Eine weitere landwirtschaftliche Maschine gemäß dem Oberbegriff des Patentanspruches 1 ist in DE 20 2014 006 873 U1 offenbart, wobei diese landwirtschaftliche Maschine eine Schwenkbegrenzungseinrichtung aufweist umfassend ein Stellelement über welches der Aktor in einem Anlenkpunkt mit dem Mittelrahmen verbunden ist, wobei die Schwenkbegrenzungseinrichtung dazu eingerichtet ist, eine translatorische Verschiebung des Anlenkspunktes des Aktors gegenüber der Drehachse zu ermöglichen, indem das Stellelement in drei unterschiedliche Positionen zum Mittelrahmen verbringbar ist.

Weitere derartige landwirtschaftliche Maschinen sind beispielsweise bei Einzelkornsämaschinen großer Arbeitsbreite bekannt. Diese Maschinen weisen zumindest einen, insbesondere regelmäßig zwei, Ausleger auf, wobei dieser sich zumindest in Arbeitsstellung quer zur Fahrtrichtung erstrecken kann. Angeordnet ist der Ausleger über zumindest eine Schwenkvorrichtung an einem Mittelrahmen der Maschine. Die Schwenkvorrichtung umfasst zumindest eine zumindest in der Arbeitsstellung der landwirtschaftlichen Maschine horizontale und zumindest annährend in Fahrtrichtung liegende Drehachse. Die Drehachse weist also annährend in Fahrtrichtung und ist zumindest in Arbeitsstellung zumindest annährend parallel zum Boden ausgerichtet. Der Ausleger ist um diese in Arbeitsstellung horizontale Drehachse drehbar am Mittelrahmen angeordnet. Um den Ausleger um die Drehachse zu drehen, ist ein Aktor vorgesehen. Der Aktor ist zwischen dem Mittelrahmen und dem Ausleger angeordnet, so dass der Ausleger durch eine Längenänderung des Aktors um die Drehachse drehbar ist.

Bei bisher bekannten Maschinen ist die Arbeitsstellung entweder so gestaltet, dass der Ausleger sich maximal bis in eine horizontale Position um die Drehachse drehen lässt, oder so gewählt, dass der Ausleger sich über die horizontale Position hinaus in eine gegenüber dem Mittelrahmen, insbesondere nach unten, abgewinkelte Position drehen lässt. Der Ausleger schließt mit einer vertikalen Achse, die die Drehachse schneidet, also entweder einen zumindest annährend rechten Winkel oder einen Winkel von mehr als 90 Grad ein. In dem ersten Fall spricht man in Arbeitsstellung von einem starren Ausleger während der zweite Fall als in Arbeitsstellung durchfallender Ausleger bezeichnet wird.

Starre Ausleger haben den Nachteil, dass sie sich auf Feldern mit Hügeln und Senken dem Gelände zumindest in Abwärtsrichtung nicht anpassen können. Starre Ausleger weisen somit eine mangelnde Bodenanpassung auf. Durchfallende Ausleger hingegen erweisen sich besonders bei der Verwendung von zwei nebeneinander angeordneten Auslegern an einer landwirtschaftlichen Maschine als nachteilig, da im Bereich des Übergangs der Ausleger zueinander an den Auslegern angeordnete Bearbeitungsaggregate ihren voreingestellten Reihenabstand zueinander nicht einhalten. Benutzer derartiger landwirtschaftlicher Maschinen sind somit schon bei der Anschaffung gezwungen, sich für eines der beiden Konzepte und die damit verbundene Nachteile zu entscheiden.

Die der Erfindung zugrundeliegende Aufgabe besteht darin, eine Einstellmöglichkeit für die Drehbarkeit des Auslegers um die Drehachse in zumindest einer Richtung zu schaffen.

Diese Aufgabe wird erfindungsgemäß gelöst durch eine landwirtschaftliche Maschine mit den Merkmalen des Anspruchs 1. Vorteilhafte Weiterbildungen sind Gegenstand der abhängigen Unteransprüche.

Es ist vorgesehen, dass die landwirtschaftliche Maschine zumindest einen Ausleger umfasst. Die landwirtschaftliche Maschine kann als Einzelkornsämaschine ausgeführt sein und/oder zumindest zwei Ausleger umfassen, wobei eine Mehrzahl von Einzelkornsäaggregaten an zumindest einem Ausleger angeordnet sein können. Ferner umfasst die Maschine einen Mittelrahmen. Der Mittelrahmen kann sich an einen Fahrwerksrahmen, der ein Fahrwerk und/oder einen Vorratsbehälter für Saatgut aufweisen kann, anschließen. Alternativ kann der Mittelrahmen selbst ein Fahrwerk und/oder einen Vorratsbehälter aufweisen. Weiter ist vorgesehen, dass die landwirtschaftliche Maschine eine Schwenkvorrichtung mit zumindest einer zumindest in Arbeitsstellung der landwirtschaftlichen Maschine horizontalen und in Fahrtrichtung liegenden Drehachse umfasst. Der Ausleger ist drehbar um die Drehachse am Mittelrahmen angeordnet. Die landwirtschaftliche Maschine umfasst ferner einen Aktor, der zwischen dem Mittelrahmen und dem Ausleger angeordnet ist. Mittels des Aktors ist der Ausleger um die Drehachse drehbar. Es ist vorgesehen, dass die landwirtschaftliche Maschine zumindest eine Schwenkbegrenzungseinrichtung aufweist umfassend ein Stellelement, über welches der Aktor in einem Anlenkpunkt mit dem Ausleger verbunden ist, wobei die Schwenkbegrenzungseinrichtung dazu eingerichtet ist, eine translatorische Verschiebung des Anlenkspunktes des Aktors entlang der Auslegerlängsachse gegenüber der Drehachse zu ermöglichen, indem das Stellelement in zumindest zwei unterschiedliche Positionen zum Ausleger verbringbar ist.

Der Anlenkpunkt ist somit entlang der Längsrichtung des Auslegers in zumindest zwei unterschiedliche, insbesondere horizontale, Abstände zu Drehachse verstellbar. Die Schwenkbegrenzungseinrichtung ist somit in einstellbarer Weise dazu eingerichtet, einerseits wahlweise mittels der ersten Lage des Anlenkspunktes infolge der ersten Position des Stellelementes die Drehbarkeit des Auslegers gegenüber dem Mittelrahmen in der Arbeitsstellung in zumindest einer Richtung auf eine zumindest annährend horizontale Ausrichtung des Auslegers zu begrenzen und andererseits wahlweise mittels der zweiten Lage des Anlenkpunktes infolge der zweiten Position des Stellelementes die Drehbarkeit des Auslegers in der Arbeitsstellung in zumindest einer Richtung auf eine gegenüber dem Mittelrahmen abgewinkelte Ausrichtung zu begrenzen. In der ersten Position des Stellelementes schließt der Ausleger einen zumindest annährend rechten Winkel mit einer vertikalen Achse, die die Drehachse schneidet, ein wenn der Ausleger sich in Arbeitsstellung befindet. In der zweiten Position des Stellelementes kann der Ausleger einen Winkel von mehr als 90 Grad mit einer vertikalen Achse, die die Drehachse schneidet, einschließen. Ungeachtet der Position des Stellelementes kann der Ausleger entgegen einer, vorzugsweise einstellbaren, Federkraft, ausgeübt vom Aktor, insbesondere in Kombination mit einem hydraulischen Speicherelement, ausweichbar um die Drehachse nach oben in Arbeitsstellung gehalten sein.

Die Erfindung macht sich die Erkenntnis zunutze, dass die Endlage des Auslegers gegenüber dem Mittelrahmen zum einen durch die maximale Länge des Aktors und zum anderen durch die Lage der Anlenkpunkte des Aktors zur Drehachse bestimmt ist. Die Erfindung ist nicht auf die offenbarte Ausführungsform beschränkt sondern erstreckt sich auf alle Umsetzungen die der Fachmann als gleichwertig erkennt. So kann auch der Anlenkpunkt des Aktors am Mittelrahmen in seinem Abstand zur Drehachse verändert werden.

In einer vorteilhaften Weiterbildung der erfindungsgemäßen landwirtschaftlichen Maschine ist der Verschiebeweg des Anlenkpunktes derart ermöglicht, dass der Verschiebeweg einer Drehbewegung des Auslegers um die Drehachse von zumindest 1,5 Grad, vorzugsweise 3 Grad, entspricht. Die Schwenkbegrenzungseinrichtung ist folglich derart gestaltet, dass sich das Stellelement zwischen zumindest zwei Positionen derart weit verbringen lässt, dass dem Ausleger durch die Verbringung des Stelleelementes, also Verschiebung des Anlenkpunktes, eine zusätzliche oder verringerte Drehbewegung von zumindest 1,5 Grad, vorzugsweise 3 Grad, ermöglicht ist, insbesondere um die Arbeitsstellung zu erreichen. Mit anderen Worten, der Verschiebeweg des Anlenkpunktes, also der Abstand zwischen den zwei Positionen des Stellelementes zum Ausleger, ist derart gewählt, dass sich dadurch eine Veränderung der ausführbaren Drehbewegung des Auslegers um die Drehachse mittels des Aktors von zumindest 1,5 Grad, vorzugsweise 3 Grad ergibt. Der Unterschied zwischen einem starr eingestellen Ausleger und einem durchfallend eingestellten Ausleger kann somit zumindest 1,5 Grad, vorzugsweise 3 Grad, betragen.

Die erfindungsgemäße landwirtschaftliche Maschine ist dadurch gekennzeichnet, dass die Schwenkbegrenzungseinrichtung eine Schraubkonsole an dem Ausleger umfasst, wobei das Stellelement als Flanschplatte ausgebildet ist, dass die Flanschplatte zumindest zwei beabstandet zueinander angeordnete Ausnehmungsbilder mit jeweils zumindest zwei Ausnehmungen aufweist, dass die Ausnehmungsbilder mit zumindest zwei Befestigungsbohrungen in der Schraubkonsole in Deckung bringbar sind, so dass die Flanschplatte mittels lösbarer Befestigungsmittel in zumindest zwei unterschiedlichen Positionen zum Ausleger befestigbar ist. Vorzugsweise umfasst ein Ausnehmungsbild jeweils drei Ausnehmungen für die lösbaren Befestigungsmittel, welche mit drei Befestigungsbohrungen in der Schraubkonsole in Deckung bringbar sind. Vorzugsweise sind die Ausnehmungen und die Befestigungsbohrungen von den Befestigungsmitteln durchsetzbar. Alternativ kann die Schraubkonsole zumindest zwei beabstandet zueinander angeordnete Ausnehmungsbilder mit jeweils zumindest zwei Ausnehmungen aufweisen, wobei die Ausnehmungsbilder mit zwei Befestigungsbohrungen in der Flanschplatte in Deckung bringbar sind. Die Schraubkonsole und die Flanschplatte, also der Ausleger und der Anlenkpunkt des Aktors, sind somit in unterschiedlichen Positionen zueinander befestigbar indem die Befestigungmittel entweder durch das eine Ausnehmungsbild und die Befestigungsbohrungen oder durch das andere Ausnehmungsbild und die Befestigungsbohrungen geführt und befestigt werden. Um zwischen den Positionen zu wechseln, können die Befestigungsmittel gelöst und entnommen werden.

In einer vorteilhaften Weiterbildung der vorstehenden Ausführungsform der landwirtschaftlichen Maschine ist vorgesehen, dass die Schraubkonsole zumindest ein Langloch aufweist, welches mit einer Führungsbohrung in der Flanschplatte in Deckung bringbar ist, wobei die Führungsbohrung und das Langloch von einem Haltemittel durchsetzbar sind. Alternativ kann die Flanschplatte zumindest ein Langloch aufweisen, welches mit einer Führungsbohrung in der Schraubkonsole in Deckung bringbar ist. Wenn das Langloch und die Führungsbohrung von einem Haltemittel durchsetzt sind, sind die Schraubkonsole und die Flanschplatte entlang des Langlochs zueinander geführt. Vorzugsweise sind zumindest zwei beabstandet zueinander angeordnete Langlöcher vorgesehen, welche mit zumindest zwei Führungsbohrungen in Deckung bringbar sind, so dass durch die die zumindest zwei Langlöcher und Führungsbohrungen durchsetzenden Haltemittel eine Linearführung geschaffen ist. Infolge dieser Maßnahme braucht die Flanschplatte nicht von der Schraubkonsole komplett demontiert werden um sie in die andere Position zu verbringen und zu befestigen, sondern nur die Befestigungsmittel aus den Befestigungsbohrungen entfernt und die Haltemittel in einen gelösten Zustand versetzt werden, so dass die Flanschplatte, insbesondere mittels des Aktors, entlang des zumindest einen Langlochs verschiebbar ist. Die Flanschplatte ist folglich in zumindest zwei unterschiedliche Positionen gegenüber der Schraubkonsole verbringbar, wenn die Führungsbohrung und das Langloch vom Haltemittel, insbesondere in einem gelösten Zustand, durchsetzt sind.

Bei der erfindungsgemäßen landwirtschaftlichen Maschine ist vorgesehen, dass der ermöglichte Verschiebeweg des Anlenkpunktes durch den Abstand zwischen den Ausnehmungsbildern definiert ist. Infolge dieser Maßnahme ist die der Erfindung zugrundeliegende Kinematik besonders zweckdienlich anpassbar.

In einer nicht erfindungsgemäßen Ausführungsform der landwirtschaftlichen Maschine umfasst die Schwenkbegrenzungseinrichtung ein längenveränderliches Einstellglied, wobei das Stellelement als drehbar am Ausleger befestigte Koppelstange ausgebildet ist und der Anlenkpunkt des Aktors an dem der Befestigung der Koppelstange abgewandten Ende der Koppelstange angeordnet ist, wobei die Koppelstange mittels des Einstellgliedes um die Befestigung am Ausleger drehbar ist. Somit ist durch die Längenveränderlichkeit des Einstellgliedes die Drehung der Koppelstange um seine Befestigung am Ausleger, also die Position der Koppelstange zum Ausleger, einstellbar, wodurch der Anlenkpunkt in translatorischer Richtung entlang der Auslegerachse gegenüber der Drehachse verschiebbar ist. Die Koppelstange, das Einstellglied, der Ausleger, der Mittelrahmen und der Aktor bilden ein Koppelgetriebe aus, wobei die Koppelstange und das Einstellglied jeweils eine Koppel, der Ausleger die Schwinge, der Mittelrahmen das Gestell und der Aktor die Kurbel ausbilden. Das Einstellglied kann stufenlos längenveränderlich ausgebildet sein. Alternativ kann das Einstellglied in Stufen längenveränderlich ausgebildet sein. Das Einstellglied kann zumindest zwei gegeneinander verschiebbare Teile und eine Lochkulisse aufweisen, wobei die Teile in unterschiedlichen Positionen zueinander mittels der Lochkulisse absteckbar sind, so dass die Länge des Einstellgliedes durch Abstecken in der Lochkulisse veränderbar ist. Das Einstellglied kann als Aktor ausgeführt sein, wobei der Aktor vorzugsweise fernverstellbar ist. Bei Ausführung des Einstellgliedes als Aktor kann eine Endlage des Aktors das Stellelement in eine erste Position zum Ausleger verbringen und die entgegengesetzte Endlage des Aktors der zweiten Position des Stellelementes zum Ausleger zugeordnet sein.

In einer Weiterbildung der vorstehenden, nicht erfindungsgemäßen Ausführungsform der landwirtschaftlichen Maschine ist das längenveränderliche Einstellglied als Spannschloss ausgeführt. Das Einstellglied ist infolge dieser Maßnahme besonders robust und einfach zu bedienen. Vorzugsweise ist der Gewindeweg des Spannschlosses so gewählt, dass der ermöglichte Verschiebeweg des Anlenkpunktes durch den Gewindeweg definiert ist, so dass die Einstellung der einen Lage oder der anderen Lage für den Benutzer durch die so geschaffenen Endstellungen vereinfacht ist.

Weitere Einzelheiten der Erfindung sind der Beispielsbeschreibung und den Zeichnungen zu entnehmen. Die Zeichnungen zeigen
- Fig.1: eine erfindungsgemäße landwirtschaftliche Maschine mit zwei Auslegern in perspektivischer Ansicht,
- Fig.2: die Maschine gemäß Fig.1 in einer ersten Arbeitsstellung in Rückansicht,
- Fig.3: die Maschine gemäß Fig.1 in einer zweiten Arbeitsstellung in Rückansicht,
- Fig.4A - 4C: ein Stellelement einer Schwenkbegrenzungseinrichtung in einer ersten Position zum Ausleger,
- Fig.5A - 5C: das Stellelement in einer zweiten Position zum Ausleger, und
- Fig.6: eine nicht erfindungsgemäße Ausführungsform einer Schwenkbegrenzungseinrichtung.

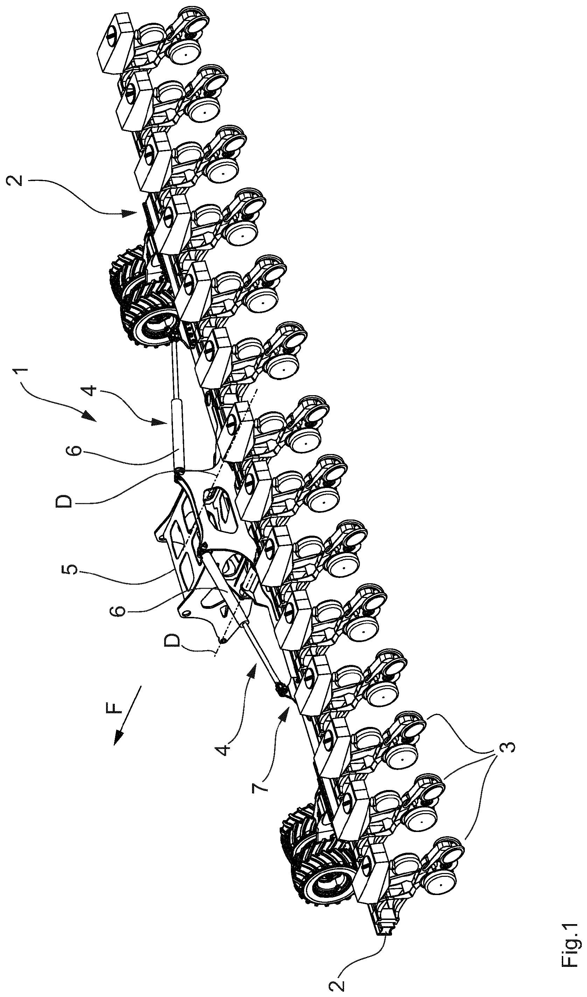

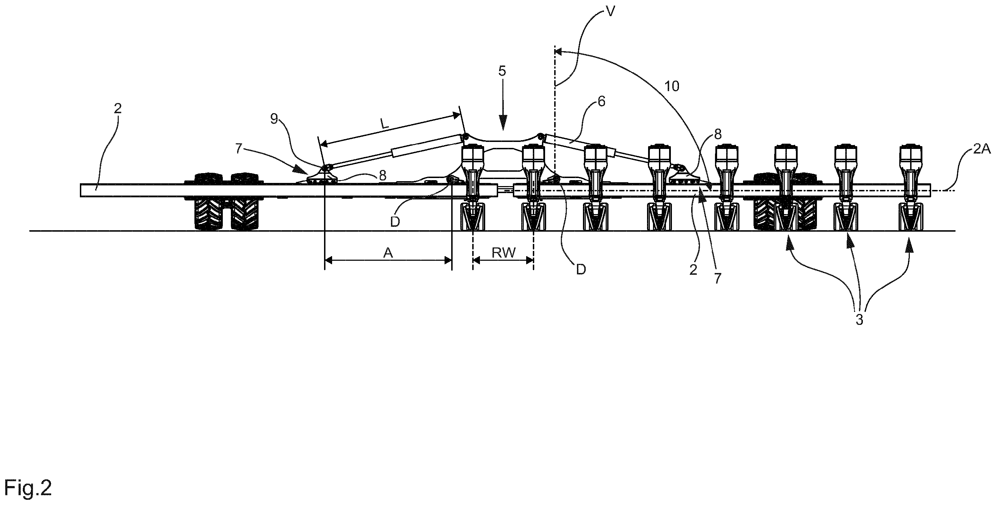

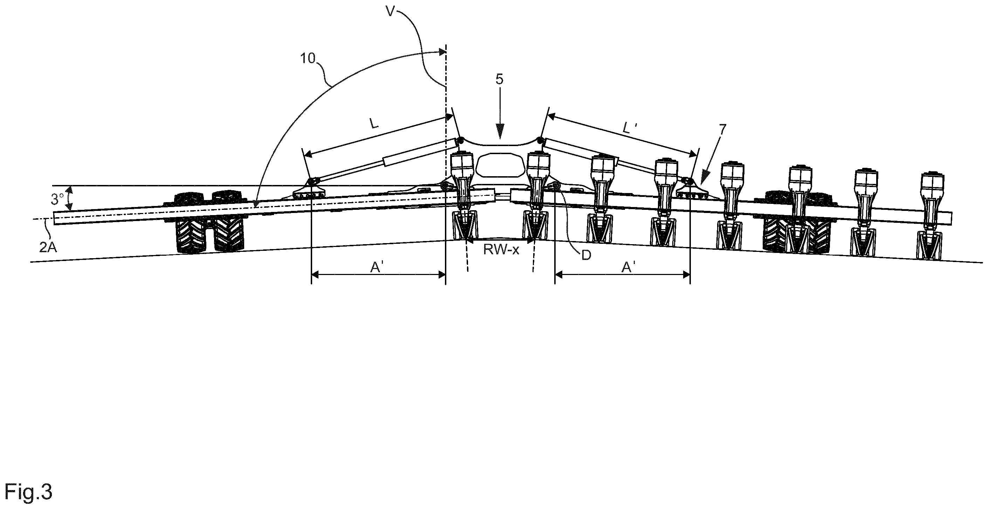

Eine erfindungsgemäße landwirtschaftliche Maschine ist in Fig.1 in perspektivischer Ansicht von schräg hinten zu sehen. Diese landwirtschaftliche Maschine ist als Einzelkornsämaschine 1 ausgeführt. Die Einzelkornsämaschine 1 weist zwei Ausleger 2 auf, welche sich während der Arbeit quer zur Fahrtrichtung F erstrecken. Die Ausleger 2 sind über jeweils eine Schwenkvorrichtung 4 an einem Mittelrahmen 5 der Einzelkornsämaschine 1 angeordnet. Die Schwenkvorrichtungen 4 weisen jeweils eine zumindest in Arbeitsstellung der Einzelkornsämaschine 1 horizontale und in Fahrtrichtung F liegende Drehachse auf. Die Drehachse D ist insofern zumindest annährend parallel zum Boden ausgerichtet. Die Ausleger 2 sind um ihre jeweilige Drehachse D drehbar am Mittelrahmen 5 angeordnet. Zur fernverstellbaren Drehung der Ausleger 2 um die Drehachse D sind zwischen dem Mittelrahmen 5 und dem Ausleger 2 Aktoren 6 angeordnet. Die Aktoren 6 sind in der Arbeitsstellung der Einzelkornsämaschine 1 maximal ausgefahren, so dass ihre Länge L maßgebend ist für die Drehausrichtung der Ausleger 2 zum Mittelrahmen 5. Ferner maßgebend ist der Abstand A zwischen der Anlenkung des Aktors 6 am Ausleger 2 und der Drehachse D. Diese Erkenntnis macht sich die Erfindung zunutze, wie näher anhand der Fig. 2 und 3 erläutert werden wird.

Bei dieser Einzelkornsämaschine 1 sind die Ausleger 2 H-profilförmig ausgeführt und dienen der Anordnung einer Mehrzahl von Säaggregaten 3. Die Säaggregate 3 sind an dem in Fahrtrichtung F hinteren Ende der Ausleger 2 angeordnet und weisen quer zur Fahrtrichtung F den Abstand einer Reihenweite RW zueinander auf. Mittels der Säaggregate 3 werden während der Arbeit der Einzelkornsämaschine 1 somit Reihen von Nutzpflanzen auf dem bearbeiteten Feld angelegt, zwischen denen jeweils ein unbepflanzter Bereich mit der Breite einer Reihenweite RW entsteht. Diese unbepflanzten Bereiche sind insbesondere während der Aufwuchsphase der Nutzpflanzen frei von Schadbewuchs zu halten. Dies kann durch den Einsatz von Pflanzenschutzmitteln, Herbiziden o.ä. und/oder die Verwendung mechanisch arbeitender Maschinen zur Beikrautbekämpfung, sogenannter Hackmaschinen, bewerkstelligt werden. Besonders bei der nachfolgenden Behandlung der unbeplfanzten Bereiche durch eine Hackmaschine ist hierbei darauf zu achten, dass die Nutzpflanzen den Abstand einer Reihenweite RW nicht unterschreiten, da die Hackmaschine ansonsten den Nutzpflanzen schadet.

Auf Feldern mit Kuppen und/oder Senken tritt allerdings regelmäßig der Fall auf, dass wenn der Ausleger 2 sich diesen Unebenheiten nach unten anpasst, sich also gegenüber dem Mittelrahmen 5 um die Drehachse D nach unten absenkt, wie in Fig.3 auf der linken Seite gezeigt, die im Mittelbereich der Einzelkornsämaschine 1 angeordneten Säaggregate 3 einen verringerten Abstand zueinander aufweisen. Der verringerte Abstand beträgt dann eine Reihenweite RW abzüglich eines von dem Drehwinkel des Auslegers 2 über seine horizontale Ausrichtung hinaus abhängigen Wertes x. Dieser Drehwinkel beträgt in Fig.3 beispielhaft 3 Grad. Werden in dieser Arbeitsstellung der Einzelkornsämaschine 1 Reihen von Nutzpflanzen angelegt, lassen diese sich nicht verlustfrei durch eine Hackmaschine pflegen. Ist die nachfolgende Pflege des Nutzpflanzenbestandes mit einer Hackmaschine geplant, besteht daher der Bedarf die Drehbarkeit der Ausleger 2 zumindest in Abwärtsrichtung zu begrenzen. Allerdings weisen die Ausleger 2 eine unzureichende Bodenanpassung auf, wenn ihre Drehbarkeit begrenzt ist, so dass andererseits der Bedarf besteht die Drehbarkeit zumindest in Abwärtsrichtung zu ermöglichen, insbesondere wenn das zu bearbeitende Feld Kuppen und/oder Senken aufweist und/oder keine nachfolgende Pflege durch eine Hackmaschine geplant ist.

Die erfindungsgemäße landwirtschaftliche Maschine, hier als Einzelkornsämaschine 1 ausgeführt, weist daher eine Schwenkbegrenzungseinrichtung 7 auf. Jedem Ausleger 2 ist eine Schwenkbegrenzungseinrichtung 7 zugeordnet. Die Schwenkbegrenzungseinrichtung 7 umfasst ein Stellelement 8. Das Stellelement 8 weist einen Anlenkpunkt 9 auf. Der Aktor 6 ist über den Anlenkpunkt 9 des Stellelementes 8 mit dem Ausleger 2 verbunden. Das Stellelement 8 ist also lösbar am Ausleger 2 montiert und bietet die Möglichkeit den Aktor 6 im Anlenkpunkt 9 anzubinden. Die Schwenkbegrenzungseinrichtung 7 ist ferner dazu eingerichtet, eine translatorische Verschiebung des Anlenkpunktes 9 des Aktors 6 entlang der Auslegerlängsachse 2A gegenüber der Drehachse D zu ermöglichen, indem das Stellelement 8 in zumindest zwei unterschiedliche Positionen zum Ausleger 2 verbringbar ist. Der Anlenkpunkt 9 ist somit entlang der Längsrichtung des Auslegers 2 in zumindest zwei unterschiedliche, horizontale Abstände A, A' zur Drehachse D verstellbar.

Auf Grundlage der Erkenntnis der Erfindung ist die Schwenkbegrenzungseinrichtung 7 somit in einstellbarer Weise dazu eingerichtet, einerseits wahlweise mittels der einen Lage des Anlenkpunktes 9 infolge der einen Position des Stellelementes 8 die Drehbarkeit des Auslegers 2 gegenüber dem Mittelrahmen 5 in der Arbeitsstellung zumindest in Abwärtsrichtung auf eine zumindest annährend horizontale Ausrichtung des Auslegers 2 zu begrenzen, wie in Fig.2 gezeigt. Und andererseits wahlweise ist die Schwenkbegrenzungseinrichtung 7 dazu eingerichtet, mittels der anderen Lage des Anlenkpunktes 9 infolge der zweiten Position des Stellelementes 8 die Drehbarkeit des Auslegers 2 in der Arbeitsstellung in Abwärtsrichtung auf eine gegenüber dem Mittelrahmen 5 abgewinkelte Ausrichtung zu begrenzen, wie in Fig.3 für den linken Ausleger 2 gezeigt. Der Abstand A des Anlenkpunktes 9 zur Drehachse D in Fig.2 ist größer als der Abstand A' des Anlenkpunktes 9 zur Drehachse D in Fig.3, so dass der Ausleger 2 sich bei der maximalen Länge L des Aktors 6 bei der Position des Stellelementes 8 gemäß Fig.3 weiter um die Drehachse D drehen kann, als bei der ersten Position des Stellelementes 8 gemäß Fig.2.

In der ersten Position des Stellelementes 8, wie in Fig.2 gezeigt, schließt der Ausleger 2 maximal einen zumindest annährend rechten Winkel 10 mit einer Vertikalachse V, die die Drehachse D schneidet, ein wenn der Ausleger 2 sich in Arbeitsstellung befindet - die Drehbarkeit des Auslegers 2 ist aufgrund der maximalen Länge L des Aktors 6 und des Abstands A des Anlenkpunktes 9 auf zumindest annährend 90 Grad zumindest in Abwärtsrichtung begrenzt. Diese Arbeitsstellung, also diese Position des Stellelementes 8 zum Ausleger 2, ist daher besonders vorteilhaft für eine nachfolgende Pflege mittels einer Hackmaschine, da die Säaggregate 3 den Abstand einer Reihenweite RW nicht unterschreiten können.

In der zweiten Position des Stellelementes 8, wie in Fig.3 für den linken Ausleger gezeigt, kann der Ausleger 2 maximal einen Winkel 10' von mehr als 90 Grad mit einer Vertikalachse V, die die Drehachse D schneidet, einschließen. Der Ausleger 2 kann sich dem Gelände somit in Abwärtsrichtung anpassen. Die Drehbarkeit des Auslegers 2 ist aufgrund der maximalen Länge L des Aktors 6 und des verringerten Abstands A' des Anlenkpunktes 9 auf einen Winkel 10' von mehr als 90 Grad begrenzt. Im vorliegenden Fall ist die Drehbarkeit auf 93 Grad begrenzt. Der Verschiebeweg des Anlenkpunktes 9, also der Unterschied zwischen dem Abstand A und dem Abstand A', ist folglich derart ermöglicht, dass er einer Drehbewegung des Auslegers 2 um die Drehachse D von zumindest 3 Grad entspricht. Diese Arbeitsstellung, also diese zweite Position des Stellelementes 8 zum Ausleger 2, ist daher besonders vorteilhaft für hügeliges Gelände und/oder wenn keine nachfolgende Pflege mittels einer Hackmaschine geplant ist. Befindet sich die Einzelkornsämaschine 1 in dieser Konfiguration in ebenem Gelände, weicht der Ausleger 2 entgegen der einstellbaren Federkraft des Aktors 6 in Aufwärtsrichtung um die Drehachse D aus, wie für den rechten Ausleger in Fig.3 gezeigt. Der Aktor 6 weist dann eine reduzierte Länge L' auf. Ungeachtet der Position des Stellelementes 8 kann der Ausleger 2 entgegen einer, vorzugsweise einstellbaren, Federkraft, ausgeübt vom Aktor 6, insbesondere in Kombination mit einem hydraulischen Speicherelement, somit ausweichbar um die Drehachse D nach oben in Arbeitsstellung gehalten sein.

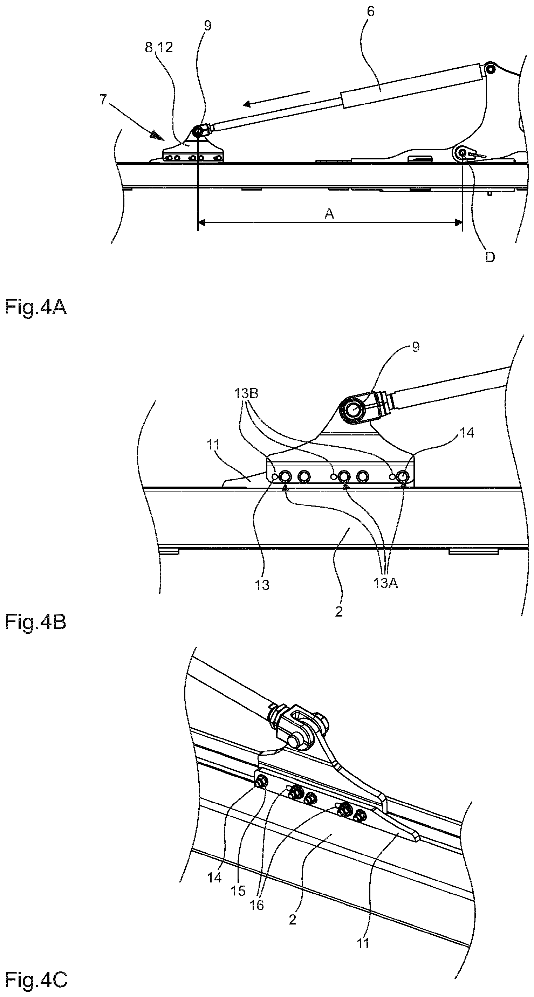

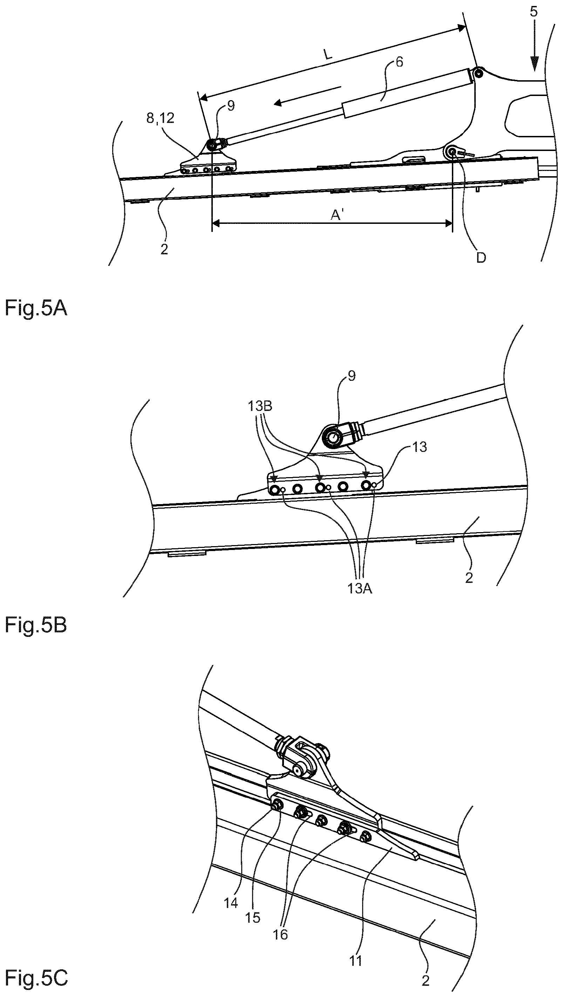

**In** den Fig.4A - C ist die Schwenkbegrenzungseinrichtung 7 in der zu Fig.2 korrespondierenden Position gezeigt, so dass der Anlenkpunkt 9 den Abstand A zur Drehachse D aufweist. Die Schwenkbegrenzungseinrichtung 7 umfasst in dieser Ausführungsform eine Schraubkonsole 11 an dem Ausleger 2. Die Schraubkonsole 11 ist fest mit dem Ausleger 2 verbunden. Das Stellelement 8 ist korrespondierend als Flanschplatte 12 ausgebildet. Die Flanschplatte 12 weist zwei beabstandet zueinander angeordnete Ausnehmungsbilder 13A, 13B auf, welche jeweils drei Ausnehmungen 13 aufweisen. Die Ausnehmungsbilder 13A, 13B sind mit jeweils drei Befestigungsbohrungen in der Schraubkonsole 11, welche in den Figuren verdeckt sind, in Deckung bringbar, so dass die Flanschplatte 12 mittels als Schraube-Mutter-Kombination 14, 15 ausgeführter, lösbarer Befestigungsmittel in zumindest zwei unterschiedlichen Position zum Ausleger 2 befestigbar ist. Die Schrauben 14 durchsetzen jeweils eine Ausnehmung 13 des Ausnehmungsbildes 13A und eine Befestigungsbohrung in der Schraubkonsole 11 und werden auf der Gegenseite durch eine Mutter 15 gesichert. Die Schraubkonsole 11 und die Flanschplatte 12, also der Ausleger 2 und der Anlenkpunkt 9 des Aktors 6, sind somit in unterschiedlichen Positionen zueinander befestigbar indem die Schrauben 14 entweder durch das Ausnehmungsbild 13A korrespondierend zum größeren Abstand A oder das Ausnehmungsbild 13B korrespondierend zum kleineren Abstand A', gezeigt in den Fig.5A - C, und die verdeckten Befestigungsbohrungen geführt und befestigt werden. Der ermöglichte Verschiebeweg des Anlenkpunktes 9 ist folglich durch den Abstand zwischen den Ausnehmungsbildern 13A, 13B definiert.

Um das als Flanschplatte 12 ausgeführte Stellelement 8 in die in Fig.5A - C gezeigte Position zu verschieben, können die Muttern 15 von den Schrauben 14 gelöst und die Schrauben 14 aus den Befestigungsbohrungen und dem Ausnehmungsbild 13A entnommen und durch das Ausnehmungsbild 13B und die Befestigungsbohrungen geführt werden. Die Flanschplatte 12 ist hierzu in den verringerten Abstand A' zur Drehachse D zu verschieben korrespondierend zu der in Fig.3 gezeigten Konstellation, so dass der Ausleger 2 sich bei der maximalen Länge L des Aktors 6 in einer gegenüber dem Mittelrahmen 5 in Abwärtsrichtung abgewinkelten Position befindet. Infolge dieser Ausführungsform der Schwenkbegrenzungseinrichtung 7 ist es dem Benutzer folglich schnell und einfach durch Lösen und erneutes Befestigen von drei Schrauben 14 ermöglicht, die Drehbarkeit des Auslegers 2 auf das jeweils gewünschte Maß, entweder zumindest annährend 90 Grad oder mehr als 90 Grad gegenüber der Vertikalachse V, zu begrenzen.

In den Fig.4A - C und Fig.5A - C weist die Schraubkonsole 11 ferner zwei Langlöcher 16 auf. Die Langlöcher 16 sind mit einer verdeckten Führungsbohrung in der Flanschplatte 12 in Deckung bringbar. Die Führungsbohrung und das jeweilige Langloch 16 sind von ebenfalls als Schraube-Mutter-Kombination 14, 15 ausführten Haltemitteln durchsetzbar. Durch die beiden Langlöcher 16 in Kombination mit den Führungsbohrungen und den Haltemitteln ist somit eine Linearführung der Flanschplatte 12 an der Schraubkonsole 11 geschaffen. Die Flanschplatte 12 lässt sich entlang der Langlöcher 16 gegenüber der Schraubkonsole 11 verschieben, so dass wahlweise das Ausnehmungsbild 13A oder Ausnehmungsbild 13B mit den Befestigungsbohrungen in der Schraubkonsole in Deckung bringbar ist. Somit brauch die Flanschplatte 12 nicht komplett von der Schraubkonsole 11 demontiert werden, um die Drehbarkeit des Auslegers 2 auf unterschiedliche Maße zu begrenzen, also die Position des Stellelementes 8 zum Ausleger 2 zu wechseln. Es brauchen lediglich die Schrauben 14 aus den Ausnehmungsbilder 13A, 13B entnommen werden, während die als Haltemittel dienenden Schrauben 14 in den Langlöchern 16 verbleiben können. Die Flanschplatte 12 kann dann mittels des Aktors 6 verschoben werden. Die als Haltemittel dienenden Schraube-Mutter-Kombinationen 14, 15 sind hierzu in einen gelockerten Zustand zu versetzen und können anschließend wieder fest angezogen werden. Alternativ können die Haltemittel auch im gelösten Zustand verbleiben.

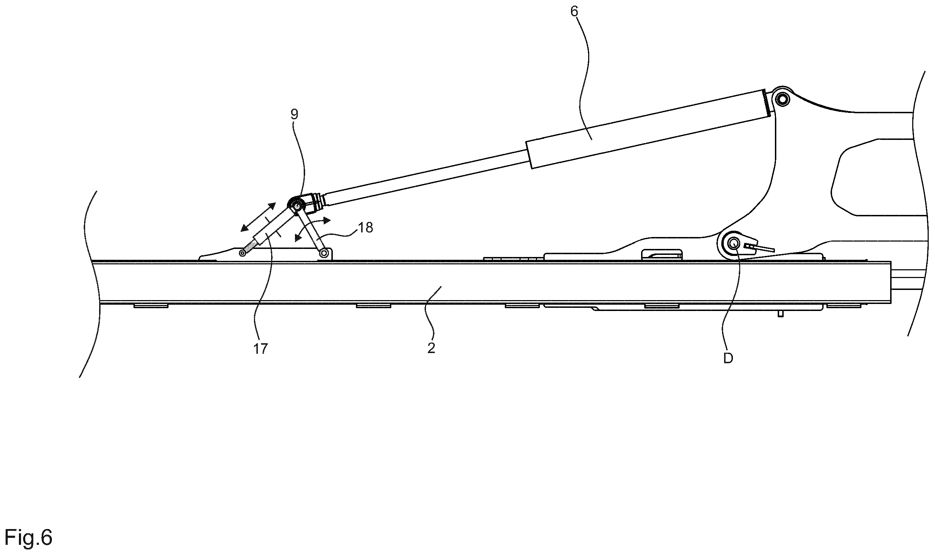

In einer alternativen, nicht erfindungsgemäßen Ausführungsform der Schwenkbegrenzungseinrichtung 7, dargestellt in Fig.6, umfasst diese ein längenveränderliches Einstellglied. In diesem Fall ist das längenveränderliche Einstellglied als Spannschloss 17 ausgeführt. Alternativ wäre denkbar das Einstellglied als Einstellaktor auszuführen. In dieser Ausführungsform ist ferner das Stellelement 8 als drehbar am Ausleger 2 befestigte Koppelstange 18 ausgebildet. Der Anlenkpunkt 9 des Aktors 6 am Ausleger 2 ist in diesem Fall an dem der Befestigung der Koppelstange 18 abgewandten Ende der Koppelstange 18 angeordnet. Wie durch die Pfeile angedeutet, ist die Koppelstange 18 mittels des als Spannschloss 17 ausgeführten Einstellgliedes um seine Befestigung am Ausleger 2 in einstellbarer Weise drehbar. Eine durch eine Längenänderung des Spannschlosses 17 induzierte Drehbewegung der Koppelstange 18 führt dazu, dass der Anlenkpunkt in unterschiedliche Abstände A, A' zur Drehachse D verbringbar ist.

Durch Verkürzung des Spannschlosses 17 entfernt sich der Anlenkpunkt 9 von der Drehachse D, so dass die Drehbarkeit des Auslegers 2 um die Drehachse D reduziert ist bei maximaler Länge L des Aktors 6. In entgegengesetzter Richtung, also durch eine vergrößerte Länge des Spannschlosses 17, ist folglich die Drehbarkeit des Ausleger 2 vergrößert, so dass er einen Winkel 10' von mehr als 90 Grad mit der Vertikalachse V einschließen kann.

Die Koppelstange 18, das Spannschloss 17, der Ausleger 2, der Mittelrahmen 5 und der Aktor 6 bilden ein Koppelgetriebe aus. Die Koppelstange 18 und der Aktor 6 bilden hierbei eine Koppel, der Ausleger 2 eine Schwinge, der Mittelrahmen 5 das Gestell und der Aktor 6 die Kurbel.

### Bezugszeichenliste

- 1: Einzelkornsämaschine
- 2: Ausleger
- 2A: Auslegerlängsachse
- F: Fahrtrichtung
- 3: Säaggregat
- RW: Reihenweite
- 4: Schwenkvorrichtung
- D: Drehachse
- 5: Mittelrahmen
- 6: Aktor
- L, L': Länge
- A, A': Abstand
- x: Wert
- 7: Schwenkbegrenzungseinrichtung
- 8: Stellelement
- 9: Anlenkpunkt
- 10, 10': Winkel
- V: Vertikalachse
- 11: Schraubkonsole
- 12: Flanschplatte
- 13A, 13B: Ausnehmungsbild
- 13: Ausnehmung
- 14: Schraube
- 15: Mutter
- 16: Langloch
- 17: Spannschloss
- 18: Koppelstange

## Patentansprüche

1. Landwirtschaftliche Maschine, insbesondere Einzelkornsämaschine (1), umfassend
- einen Mittelrahmen (5),
- zumindest einen Ausleger (2),
- eine Schwenkvorrichtung (4) mit zumindest einer zumindest in Arbeitsstellung der landwirtschaftlichen Maschine horizontalen und in Fahrtrichtung (F) liegenden Drehachse (D), wobei der Ausleger (2) um die horizontale Drehachse (D) drehbar am Mittelrahmen (5) angeordnet ist, wobei zwischen dem Mittelrahmen (5) und dem Ausleger (2) ein Aktor (6) angeordnet ist mittels dem der Ausleger (2) um die Drehachse (D) drehbar ist,
**dadurch gekennzeichnet, dass** die landwirtschaftliche Maschine zumindest eine Schwenkbegrenzungseinrichtung (7) aufweist umfassend ein Stellelement (8), über welches der Aktor (6) in einem Anlenkpunkt (9) mit dem Ausleger (2) verbunden ist, wobei die Schwenkbegrenzungseinrichtung (7) dazu eingerichtet ist, eine translatorische Verschiebung des Anlenkspunktes (9) des Aktors (6) entlang der Auslegerlängsachse (2A) gegenüber der Drehachse (D) zu ermöglichen, indem das Stellelement (8) in zumindest zwei unterschiedliche Positionen zum Ausleger (2) verbringbar ist,
dass die Schwenkbegrenzungseinrichtung (7) eine Schraubkonsole (11) an dem Ausleger (2) umfasst, wobei das Stellelement (8) als Flanschplatte (12) ausgebildet ist, dass die Flanschplatte (12) zumindest zwei beabstandet zueinander angeordnete Ausnehmungsbilder (13A, 13B) mit jeweils zumindest zwei Ausnehmungen (13) aufweist, dass die Ausnehmungsbilder (13A, 13B) mit zumindest zwei Befestigungsbohrungen in der Schraubkonsole (11) in Deckung bringbar sind, so dass die Flanschplatte (12) mittels lösbarer Befestigungsmittel (14, 15) in zumindest zwei unterschiedlichen Positionen zum Ausleger (2) befestigbar ist,
dass der ermöglichte Verschiebeweg des Anlenkpunktes (9) durch den Abstand zwischen den Ausnehmungsbildern (13A, 13B) definiert ist.

2. Landwirtschaftliche Maschine nach Anspruch 1, **dadurch gekennzeichnet, dass** der Verschiebeweg des Anlenkpunktes (9) derart ermöglicht ist, dass er einer Drehbewegung des Auslegers (2) um die Drehachse (D) von zumindest 1,5 Grad, vorzugsweise 3 Grad, entspricht.

3. Landwirtschaftliche Maschine nach Anspruch 1 oder 2, **dadurch gekennzeichnet, dass** die Schraubkonsole (11) zumindest ein Langloch (16) aufweist, welches mit einer Führungsbohrung in der Flanschplatte (12) in Deckung bringbar ist, dass die Führungsbohrung und das Langloch (16) von einem Haltemittel (14, 15) durchsetzbar sind.

## Claims

1. Agricultural machine, in particular a precision seed drill (1), comprising
- a central frame (5),
- at least one boom (2),
- a swiveling device (4) having at least one axis of rotation (D) which is horizontal at least in the working position of the agricultural machine and lies in the direction of travel (F), the boom (2) being rotatably arranged on the central frame (5) about the horizontal axis of rotation (D), an actuator (6) by means of which the boom (2) can be rotated about the axis of rotation (D) being arranged between the central frame (5) and the boom (2),
**characterized in that** the agricultural machine has at least one swivel limiting apparatus (7) comprising an actuating element (8) via which the actuator (6) is connected to the boom (2) at a pivot point (9), the swivel limiting apparatus (7) being configured to allow a translational shift of the pivot point (9) of the actuator (6) along the longitudinal axis (2A) of the boom relative to the axis of rotation (D) by the actuating element (8) being movable into at least two different positions with respect to the boom (2),
**in that** the swivel limiting apparatus (7) comprises a screw bracket (11) on the boom (2), the actuating element (8) being designed as a flange plate (12), **in that** the flange plate (12) has at least two spaced-apart recess patterns (13A, 13B) each having at least two recesses (13), **in that** the recess patterns (13A, 13B) are able to be aligned with at least two fastening holes in the screw bracket (11) so that the flange plate (12) can be fastened to the boom (2) in at least two different positions by means of releasable fastening means (14, 15),
**in that** the allowed shift path of the pivot point (9) is defined by the distance between the recess patterns (13A, 13B).

2. Agricultural machine according to claim 1, **characterized in that** the shift path of the pivot point (9) is allowed such that it corresponds to a rotational movement of the boom (2) about the axis of rotation (D) by at least 1.5 degrees, preferably 3 degrees.

3. Agricultural machine according to claim 1 or claim 2,
**characterized in that** the screw bracket (11) has at least one elongate hole (16) which can be aligned with a guide hole in the flange plate (12), **in that** the guide hole and the elongate hole (16) can be penetrated by a holding means (14, 15).

## Revendications

1. Machine agricole, en particulier semoir monograine (1), comprenant
- un châssis central (5),
- au moins un bras (2),
- un dispositif de pivotement (4) comportant au moins un axe de rotation (D) horizontal au moins dans une position de travail de la machine agricole et situé dans le sens d'avancement (F), dans laquelle le bras (2) est disposé sur le châssis central (5) de manière à pouvoir tourner autour de l'axe de rotation (D) horizontal, dans laquelle un actionneur (6) est disposé entre le châssis central (5) et le bras (2), au moyen duquel actionneur le bras (2) peut tourner autour de l'axe de rotation (D),
**caractérisée en ce que** la machine agricole présente au moins un appareil de limitation de pivotement (7) comprenant un élément de réglage (8) par l'intermédiaire duquel l'actionneur (6) est relié au bras (2) en un point d'articulation (9), dans laquelle l'appareil de limitation de pivotement (7) est conçu pour permettre un déplacement en translation du point d'articulation (9) de l'actionneur (6) le long de l'axe longitudinal de bras (2A) par rapport à l'axe de rotation (D) par le fait que l'élément de réglage (8) peut être amené dans au moins deux positions différentes par rapport au bras (2),
**en ce que** l'appareil de limitation de pivotement (7) comprend une console à vis (11) sur le bras (2), dans laquelle l'élément de réglage (8) est réalisé en tant que plaque formant bride (12), **en ce que** la plaque formant bride (12) présente au moins deux marquages d'évidements (13A, 13B) disposés à distance l'un de l'autre et comportant respectivement au moins deux évidements (13), **en ce que** les marquages d'évidement (13A, 13B) peuvent être amenés de manière à coïncider avec au moins deux alésages de fixation dans la console à vis (11), de sorte que la plaque formant bride (12) peut être fixée dans au moins deux positions différentes par rapport au bras (2) à l'aide de moyens de fixation (14, 15) amovibles,
**en ce que** la course de déplacement permise du point d'articulation (9) est définie par la distance entre les marquages d'évidements (13A, 13B).

2. Machine agricole selon la revendication 1, **caractérisée en ce que** la course de déplacement du point d'articulation (9) est permise de telle sorte qu'elle correspond à un mouvement de rotation du bras (2) autour de l'axe de rotation (D) d'au moins 1,5 degré, de préférence de 3 degrés.

3. Machine agricole selon la revendication 1 ou 2, **caractérisée en ce que** la console à vis (11) présente au moins un trou oblong (16) qui peut être amené de manière à coïncider avec un alésage de guidage dans la plaque formant bride (12), **en ce que** l'alésage de guidage et le trou oblong (16) peuvent être traversés par un moyen de retenue (14, 15).
